# FASCICULE DE BREVET EUROPEEN

(11) **EP 0 524 855 B1**
(45) Date de publication et mention de la délivrance du brevet: **12.03.1997**
(21) Numéro de dépôt: 92401976.3
(22) Date de dépôt: 09.07.1992
(51) Int. Cl.: G01B 7/16, G01L 1/22

(54) **Circuit électrique tel qu'un pont de wheatstone pourvu d'une partie d'ajustage de resistance**
Elektrische Schaltung oder Wheatstonebrücke mit Vorrichtung zum Einstellen der Widerstände
Electrical circuit or wheatstone bridge provided with a resistance trimming portion

(30) Priorité: 26.07.1991 FR 9109479
(43) Date de publication de la demande: 27.01.1993
(73) Titulaire: Schlumberger Limited, New York, N.Y. 10017 (US); SCHLUMBERGER TECHNOLOGY B.V., NL-2517 KM Den Haag (NL); SCHLUMBERGER HOLDINGS LIMITED, Road Town, Tortola (VG)
(72) Inventeur: Rezgui, Fadhel, F-75014 Paris (FR); Petitjean, Luc, Danbury, Connecticut 06811 (US)
(74) Mandataire: Hagel, Francis

(56) Documents cités:
- EP-A- 0 339 191
- EP-A- 0 373 010
- DE-A- 3 528 510
- GB-A- 2 063 560
- US-A- 4 945 762

## Description

L'invention a trait à un circuit électrique tel qu'un pont de Wheatstone pourvu d'au moins une partie d'ajustage de résistance.

De tels circuits sont largement utilisés pour mesurer des déformations de pièces mécaniques par la variation de la valeur des résistances qui les composent et qui sont déformées en même temps que la pièce sur laquelle elles sont collées ou déposées. Un avantage essentiel du pont de Wheatstone est sa bonne stabilité sur de longues durées et vis-à-vis des variations de température. Il est cependant nécessaire d'effectuer des réglages de résistances afin d'obtenir l'équilibrage du pont, c'est-à-dire un signal nul entre les bornes de mesure quand aucun effort n'est appliqué. C'est pourquoi les ponts sont munis de résistances supplémentaires qui peuvent être ajustées pour établir l'équilibre du pont et éventuellement sa sensibilité thermique. Plusieurs méthodes ont déjà été conçues pour réaliser ces ajustages.

Dans le brevet américain 4 945 762, des résistances de limitation de courant et des résistances d'ajustage sont disposées en série. Pendant le fonctionnement normal du circuit, le courant passe à la fois par les résistances d'ajustage et les résistances de limitation de courant. Quand un ajustage est décidé, du courant est introduit en sens inverse par pulsations et contourne les résistances du pont et celles de limitation de courant en passant par des dérivations munies de diodes passantes dans ce sens uniquement. Le courant ne passe que par les résistances d'ajustage, qui subissent alors des intensités de courant telles que des migrations d'atomes qui les constituent se produisent vers le substrat environnant, ce qui modifie leur résistance.

Dans d'autres conceptions, dont le document GB-A-2 063 560 fournit une illustration, on ajoute ou on supprime des résistances d'ajustage groupées en parallèle. L'inconvénient est que ces procédés créent là où on les applique des hétérogénéités physicochimiques du matériau conducteur qui compose le pont ou le circuit, par exemple des oxydations. Les différents matériaux ou alliages ont généralement des caractéristiques qui évoluent différemment avec le temps, et aussi des comportements différents quand la température varie, car le comportement thermique dépend de chaque matériau. La qualité des mesures est compromise par ces diverses sources d'imprécisions.

L'objet de l'invention est donc de réaliser l'ajustage d'un circuit électrique tel qu'un pont de Wheatstone sans affecter ses caractéristiques de mesure et leur stabilité dans le temps.

Sous sa forme la plus simple, l'invention a pour objet un circuit électrique selon la revendication 1.

La partie de Largeur uniforme peut être soit continue, soit constituée de bandes parallèles, identiques et d'écartement constant. Dans ce dernier cas l'ajustage est normalement meilleur car il est facile de programmer un laser pour que son faisceau coupe un nombre déterminé de bandes, c'est-à-dire une largeur très précise du tronçon.

Le circuit est avantageusement constitué d'une couche d'épaisseur uniforme et de composition invariable.

Le circuit peut être un pont de Wheatstone ; il est alors formé de deux circuits conformes à la description précédente et dont les bornes d'entrée et de sortie sont respectivement confondues.

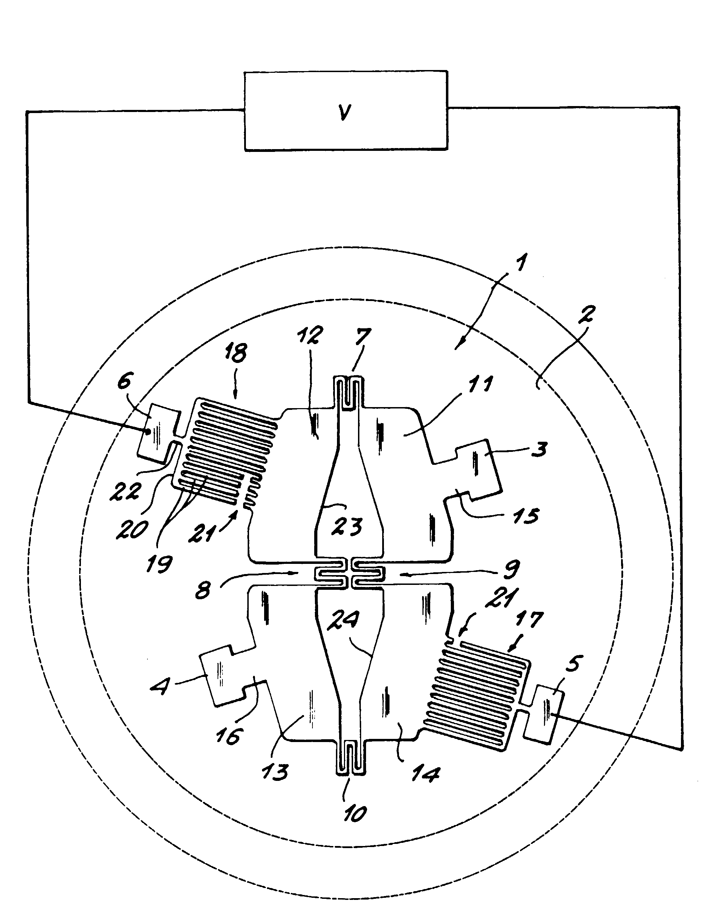

On va maintenant décrire plus en détail une réalisation de l'invention, en même temps que les phénomènes en jeu, à l'aide du commentaire de la figure unique.

On y a figuré un pont de Wheatstone 1 constitué à partir d'une couche électriquement conductrice, homogène et d'épaisseur uniforme déposée sur un substrat 2 puis gravée à la forme appropriée pour former une piste continue. Le substrat 2 peut être la surface interne d'une capsule de saphir appartenant à un capteur de pression dont on trouvera une description dans la demande de brevet français 2638524, mais l'invention n'est évidemment pas limitée à cette seule réalisation.

Le pont de Wheatstone 1 comporte une borne d'entrée de courant 3, une borne de sortie de courant 4, une borne positive de mesure 5, une borne négative de mesure 6, quatre résistances 7 à 10 formées par des rétrécissements de la piste constituant le circuit et recourbées en serpentins, quatre élargissements 11 à 14 de la piste reliant chacun deux résistances 7 à 10, deux tronçons de raccordement 15 et 16 reliant respectivement l'élargissement 11 et l'élargissement 13 à la borne d'entrée de courant 3 et à la borne de sortie de courant 4 et deux tronçons d'ajustage 17 et 18 reliant respectivement l'élargissement 12 et l'élargissement 14 à la borne positive de mesure 5 et à la borne négative de mesure 6. Chacun de ces tronçons d'ajustage 17 et 18 est formé d'un alignement de fines bandes parallèles 19, disposées à la façon d'un peigne entre l'élargissement 12 ou 14 et une traverse conductrice 20 reliée à la borne de mesure 5 ou 6 par une bande de jonction 22. Les bandes parallèles 19 sont identiques et séparées par des écartements constants. L'équilibre du pont peut être ajusté en coupant au laser l'une après l'autre les bandes parallèles 19 selon des lignes de coupure 21 et en augmentant ainsi la résistance globale de chacun des tronçons d'ajustage 17 et 18.

Les parties des bandes parallèles 19 coupées qui aboutissent à l'élargissement 12 ou 14, qui forment des bras morts, en ce sens qu'elles ne sont pas aptes à transmettre du courant vers les bornes de mesure 5 et 6 ou en sens opposé, ont pourtant un effet sur le comportement global du pont. En effet, la coupure provoque des modifications locales de la composition du matériau conducteur et notamment des oxydations. Une partie résiduelle du courant pourrait continuer de circuler dans les brins coupés, dont les parties altérées par la coupure influeraient sur la stabilité à long terme du pont. L'effet peut sembler peu important et serait tolérable dans la plupart des situations, mais il est indésirable pour des capteurs dont on attend des mesures de grande précision pendant plusieurs semaines et dans des milieux soumis à des fortes variations de température, comme dans les mesures dans les forages pétroliers.

Les élargissements 12 et 14 de la piste conductrice entre les résistances 7 et 8 d'une part, 9 et 10 d'autre part s'élargissent préférentiellement vers les tronçons d'ajustage 17 et 18, et même exclusivement dans la réalisation représentée, si bien que le courant qui circule entre les résistances 7 à 10 est concentré dans les zones voisines des bords internes 23 et 24 des élargissements 12 et 14, ces zones constituant le plus court chemin. Comme le voltmètre V branché entre les bornes de mesure 5 et 6 a une très grande impédance par rapport à la résistance totale du circuit, les lignes de courant ne sont presque pas déviées et une très faible partie atteint les tronçons d'ajustage. L'effet des modifications de composition devient donc absolument négligeable dans cette situation, et une excellente stabilité du pont de Wheatstone 1 dans le temps peut être espérée.

## Revendications

1. Circuit électrique comprenant une piste conductrice s'étendant entre une borne d'entrée (3) et une borne de sortie (4) de courant et composée de deux résistances (7, 8) reliées par une partie de connexion (12), un tronçon conducteur (18, 22) s'étendant entre la partie de connexion (12) et une borne de mesure (6), caractérisé par le fait que la partie de connexion (12) comprend une première région offrant le plus court chemin à la circulation de courant entre les résistances, dans laquelle la densité de courant est relativement élevée, et une deuxième région éloignée de la dite première région dans une direction transversale à la circulation du courant entre les résistances, dans laquelle la densité de courant est relativement basse, et le tronçon (18, 22) présente une partie d'ajustage (18) reliée à la dite deuxième région, grâce à quoi la circulation de courant dans la partie d'ajustage est faible.

2. Circuit électrique selon la revendication 1, caractérisé en ce que la partie d'ajustage est de largeur uniforme et constituée de bandes parallèles (19), identiques et d'écartement constant.

3. Circuit électrique selon l'une quelconque des revendications 1 ou 2, caractérisé en ce qu'il est constitué d'une couche d'épaisseur uniforme et de composition homogène.

4. Pont de Wheatstone, caractérisé en ce qu'il est formé de deux circuits selon l'une quelconque des revendications 1 à 3 ou l'une des revendications 4 ou 5, les bornes d'entrée et les bornes de sortie de courant étant confondues respectivement.

5. Capteur de pression destiné à l'emploi dans les forages pétroliers, caractérisé par le fait qu'il comprend un pont de Wheatstone selon la revendication 4.

## Patentansprüche

1. Elektrische Schaltung mit einer Leiterbahn, die sich zwischen einem Eingangsanschluß (3) und einem Ausgangsanschluß (4) für den Strom erstreckt, und aus zwei Widerständen (7, 8) gebildet ist, die durch eine Verbindungspartie (12) verbunden sind, wobei sich ein leitender Abschnitt (18, 22) zwischen der Verbindungspartie (12) und einem Meßanschluß (6) erstreckt, dadurch gekennzeichnet, daß die Verbindungspartie (12) eine erste Region umfaßt, die den kürzesten Weg für den Stromfluß zwischen den Widerständen bietet, worin die Stromdichte relativ hoch ist, und eine zweite, von der ersten entfernte Region in einer Richtung senkrecht zur dem Stromfluß zwischen den Widerständen umfaßt, in der die Stromdichte relativ niedrig ist, und daß der Abschnitt (18, 22) eine Justierpartie (18) aufweist, die mit der zweiten Region verbunden ist, dank welcher der Stromfluß in der Justierpartie gering ist.

2. Elektrische Schaltung nach Anspruch 1, dadurch gekennzeichnet, daß die Justierpartie von gleichförmiger Breite ist und von parallelen identischen Bändern (19) gleichen Abstands gebildet wird.

3. Elektrische Schaltung nach einem der Ansprüche 1 oder 2, dadurch gekennzeichnet, daß sie von einer Schicht gleichförmiger Dicke und homogener Zusammensetzung gebildet ist.

4. Wheatstone-Brücke, dadurch gekennzeichnet, daß sie aus zwei Schaltungen gemäß einem der Ansprüche 1 bis 3 gebildet ist, oder einem der Ansprüche 4 oder 5, wobei die Eingangsanschlüsse und die Ausgangsanschlüsse des Stromes jeweils zusammenfallen.

5. Drucksensor, dazu bestimmt, in Erdölbohrlöchern verwendet zu werden, dadurch gekennzeichnet, daß er eine Wheatstone-Brücke nach Anspruch 4 umfaßt.

## Claims

1. An electrical circuit comprising a conductive track extending between a current input terminal (3) and a current output terminal (4) and comprising two resistors (7, 8) connected by a connecting part (12), a conductive segment (18, 22) extending between the connecting part (12) and a measuring terminal (6), characterized in that the connecting part (12) comprises a first region providing the shortest route to the current flow between the resistors, in which the current density is relatively high, and a second region spaced from said first region in a transverse direction with respect to the current flow between the resistors, in which the current density is relatively low, and in that the segment (18, 22) has an adjusting portion (18) connected to said second region, whereby the current flow in the adjusting portion is low.

2. An electrical circuit according to claim 1, characterized in that the adjusting portion (18) is of uniform width and is formed by identical, uniformly spaced parallel strips (19).

3. An electrical circuit according to any one of claims 1 or 2, characterized in that it is constituted by a layer of uniform thickness and of uniform composition.

4. A Wheatstone bridge characterized in that it is formed by two circuits according to any of claims 1 to 3 or one of claims 4 or 5, with their current input terminals and output terminals being respectively one and the same.

5. A pressure sensor intended for use in oil wells, characterized in that it comprises a wheatstone bridge according to claim 4.
